# EUROPÄISCHE PATENTSCHRIFT

(11) **EP 3 887 114 B1**
(45) Veröffentlichungstag und Bekanntmachung des Hinweises auf die Patenterteilung: **17.01.2024**
(21) Anmeldenummer: 19821237.5
(22) Anmeldetag: 28.11.2019
(51) Int. Cl.: B29B 9/06, B26D 7/26, B29C 48/00, B29C 48/92, B29C 48/04, B29C 48/345, B26D 1/28, B29C 48/05

(54) **VORRICHTUNG ZUM UNTERWASSERGRANULIEREN VON KUNSTSTOFF**
DEVICE FOR THE UNDERWATER GRANULATION OF PLASTIC
DISPOSITIF POUR LA GRANULATION SOUS L'EAU DE MATIÈRE PLASTIQUE

(30) Priorität: 29.11.2018 AT 510552018
(43) Veröffentlichungstag der Anmeldung: 06.10.2021
(73) Patentinhaber: Econ GmbH, 4616 Weißkirchen/Traun (AT)
(72) Erfinder: HEHENBERGER, Gerhard, 4622 Eggendorf (AT)
(74) Vertreter: Hübscher & Partner Patentanwälte GmbH
(86) Internationale Anmeldenummer: PCT/AT2019/060405
(87) Internationale Veröffentlichungsnummer: WO 2020/107050

(56) Entgegenhaltungen:
- WO-A2-01/94088
- WO-A2-02/100621
- AT-A1- 503 324
- DE-A1- 2 444 839
- DE-A1-102004 020 898
- DE-U1-202005 001 809
- DE-U1-202016 001 455
- GB-A- 2 017 571
- US-A- 4 564 350
- US-B1- 6 217 802

## Beschreibung

Die Erfindung bezieht sich auf eine Vorrichtung zum Unterwassergranulieren von Kunststoff mit einem Granulierkopf, mit einem an den Granulierkopf anschließbaren Granuliergehäuse, das einen mit einer Lochplatte des Granulierkopfs zusammenwirkenden Messerkopf aufnimmt, dessen Messerkopfwelle in einer Gleithülse drehbar, aber axial unverschiebbar gelagert ist, und mit einer gehäusefesten, axialen Verschiebeführung für die mittels eines Stelltriebs verlagerbare Gleithülse.

Im Granulierkopf einer Vorrichtung zum Granulieren von Kunststoff wird die über ein Anfahrventil von einem Extruder geförderte Kunststoffschmelze in eine Vielzahl von Strängen aufgeteilt, die mithilfe von Düsen durch eine Lochplatte hindurch in ein Granuliergehäuse austreten, in dem ein Messerkopf gelagert ist. Durch die an die Lochplatte angestellten Messer des koaxial zur Lochplatte rotierenden Messerkopfs werden die aus der Lochplatte austretenden Schmelzestränge zu einem Granulat geschnitten, wobei das Granulat in einem das Gehäuse durchströmenden Kühlwasserstrom erstarrt und mit dem Kühlwasserstrom aus dem Gehäuse gefördert wird. Die Anstellung des Messerkopfs an die Lochplatte ist dabei einerseits hinsichtlich der Schnittbedingungen und anderseits bezüglich des Verschleißes von besonderer Bedeutung. Aus diesem Grund wurde bereits vorgeschlagen (US 2010/0233307 A1), die Messerkopfwelle in einer Gleithülse drehbar, aber axial unverschiebbar zu lagern und die Gleithülse zur Anstellung des Messerkopfs an die Lochplatte mittels eines Stelltriebs in einer an das Granuliergehäuse angeschlossenen Verschiebeführung gegen die Lochplatte hin zu verlagern. Mithilfe eines einstellbaren Anschlags soll dabei sichergestellt werden, dass der Anpressdruck der Messer an die Lochplatte beschränkt bleibt, um den Verschleiß gering zu halten und trotzdem die Messeranlage an der Lochplatte sicherzustellen.

Um einen entsprechenden Anpressdruck des Messerkopfs an der Lochplatte sicherzustellen, sind unterschiedliche Lösungen bekannt (WO 01/94088 A2, WO 02/100621 A2). Die diesen Lösungen zugrundeliegende Granuliervorrichtung weist einen in einen Düsenstock eingesetzten Granulierkopf mit einer flächig anliegenden Lochplatte sowie ein am Düsenstock befestigtes Granuliergehäuse auf, an dem ein Stutzen stirnseitig angeflanscht ist, in dem eine die Messerwelle aufnehmende, an einen Stelltrieb angeschlossene Gleithülse axial verschiebbar gelagert ist.

Für manche Anwendungen ist allerdings der trotz einer Messeranstellung mit geringer Kraft unvermeidbare Metallabrieb unzulässig, sodass ein Schneiden unter Wahrung eines Spalts zwischen Messer und Lochplatte versucht wurde, allerdings mit einem hinsichtlich der Schneidbedingungen unbefriedigenden Ergebnis, weil der Spalt zwischen den Messern und der Lochplatte aufgrund der unterschiedlichen Einflüsse und Belastungen nicht ausreichend klein gehalten werden konnte.

Damit bei Granuliervorrichtungen der Gefahr eines Erstarrens der Kunststoffschmelze in den Düsen begegnet werden kann, ist es schließlich bekannt (US 4 564 350), die die Düsenenden aufnehmende Lochplatte gegenüber dem Granulierkopf wärmegedämmt anzuordnen, sodass dem Granulierkopf durch die Lochplatte nicht im Düsenbereich Wärme entzogen werden kann.

Ein einteilig ausgeführtes Granuliergehäuse ist prinzipiell aus der Druckschrift DE 10 2004 020 898 A1 bekannt; allerdings ist dort das Granuliergehäuse über ein Zwischenbauteil offenbar direkt mit dem heissen Granuliergehäuse und nicht mit der thermisch isolierten Lochplatte verbunden.

Der Erfindung liegt die Aufgabe zugrunde, eine Granuliervorrichtung so auszugestalten, dass trotz der auftretenden Belastungen und Einflüsse während des Granulierens ein für eine ausreichende Schnittqualität erforderlicher, kleiner Spalt zwischen den Messern des Messerkopfs und der Lochscheibe sichergestellt werden kann.

Ausgehend von einer Granuliervorrichtung der eingangs geschilderten Art löst die Erfindung die gestellte Aufgabe dadurch, dass das Granuliergehäuse an einem Anschlussflansch der gegenüber dem Granulierkopf wärmegedämmt angeordneten Lochplatte befestigbar ist und die Verschiebeführung für die Gleithülse bildet.

Durch die Maßnahme, das Granuliergehäuse nicht mit dem die Lochplatte tragenden Granulierkopf, sondern unmittelbar mit einem Anschlussflansch der Lochplatte zu verbinden, wird zunächst eine thermische Trennung des Granuliergehäuses vom heißen Granulierkopf erreicht, weil die Lochplatte gegenüber dem Granulierkopf wärmegedämmt angeordnet ist. Dazu kommt, dass die Messerkopfwelle senkrecht gegenüber der dem Messerkopf zugewandten Lochplattenfläche ausgerichtet sein muss, um den Spalt zwischen den Messern und der Lochplatte entlang der Umlaufbahn der Messer konstant zu halten, sodass die unmittelbare Ausrichtung des den Messerkopf aufnehmenden Granuliergehäuses gegenüber der Lochplatte eine wesentliche Konstruktionsbedingung für die geforderte Ausrichtung der Messerkopfwelle darstellt, wenn das Granuliergehäuse selbst die Verschiebeführung für die Gleithülse bildet und diese Verschiebeführung nicht in an sich bekannter Weise an das Granuliergehäuse angebaut wird. Es entfallen daher die beim Verbinden eines Granuliergehäuses mit einer Verschiebeführung für eine Gleithülse auftretenden, unwägbaren Toleranzen, wodurch die konstruktiven Voraussetzungen für eine zur Lochplatte senkrechte Verschiebeführung der Gleithülse geschaffen werden, und zwar unter Einhaltung sehr geringer Toleranzen.

Um ein einfaches Lösen des Granuliergehäuses von der Lochplatte zu erreichen, kann das Granuliergehäuse einen an den Anschlussflansch der Lochplatte anschließbaren Verbindungsflansch bilden, wobei der Anschlussflansch und der Verbindungsflansch miteinander durch die beiden Flansche außen umgreifende Klemmbacken verbunden werden. Dies gilt insbesondere bei einer Ausführung der Klemmbacken, bei der die Klemmbacken eine entlang einer Durchmesserebene der Flansche verlaufende Trennfuge bilden und die aneinanderliegenden Flansche in einer Aufnahmenut mit sich gegen den Nutgrund verjüngenden Nutflanken aufnehmen, über die die beiden Flansche beim Schließen der Klemmbacken über ihren Umfang gleichmäßig aneinandergedrückt gehalten werden.

Die geforderte, durch die erfindungsgemäßen Maßnahmen erreichbare Ausrichtung der Messerkopfwelle senkrecht zur Lochplatte darf nicht durch eine belastungsbedingte Verformung des Granuliergehäuses in Frage gestellt werden. Das Granuliergehäuse ist daher ausreichend steif auszubilden. Zusätzlich kann für eine Gewichtsentlastung des Granuliergehäuses gesorgt werden, indem das Granuliergehäuse an einem Traggestell mit Bewegungsspiel lastabtragend abgestützt wird. Das Vorsehen eines Bewegungsspiels ist notwendig, um eine zwängungsfreie Ausrichtung des Granuliergehäuses gegenüber der Lochplatte zu ermöglichen.

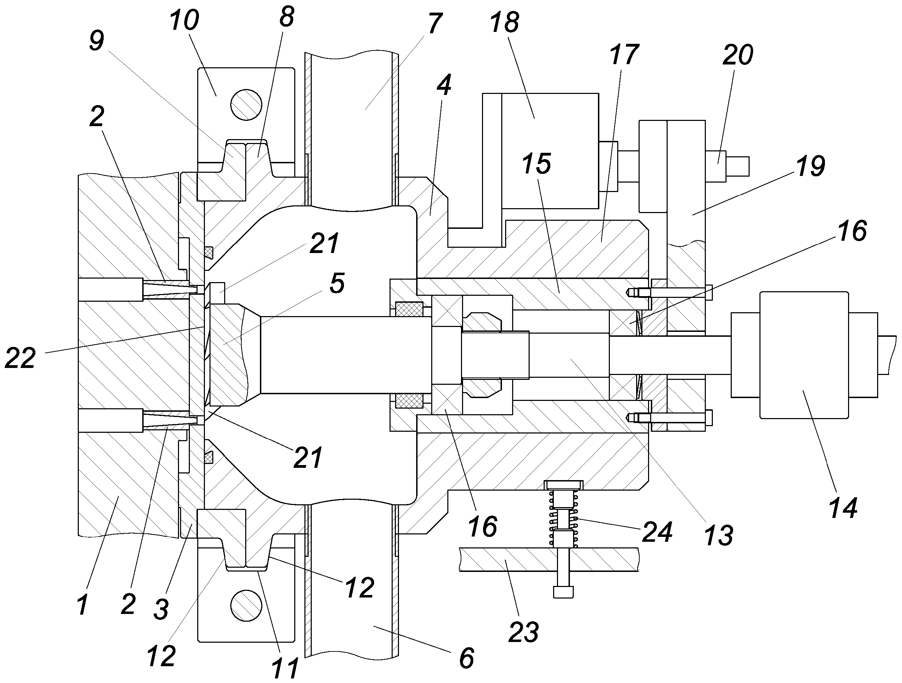

In der Zeichnung ist der Erfindungsgegenstand beispielsweise dargestellt und zwar wird eine erfindungsgemäße Granuliervorrichtung in einem schematischen Längsschnitt gezeigt

Die dargestellte Vorrichtung weist einen über ein Anfahrventil an einen Extruder anschließbaren Granulierkopf 1 auf, in dem die Kunststoffschmelze in herkömmlicher Weise auf eine Mehrzahl von Strängen aufgeteilt und mithilfe von Düsen 2 durch eine Lochplatte 3 in ein Granuliergehäuse 4 gefördert wird, in dem ein Messerkopf 5 drehbar gelagert ist, der die aus der Lochplatte 3 austretenden Kunststoffstränge zum Granulat zerkleinert, das über einen durch einen Zulauf 6 zugeführten und durch einen Ablauf 7 abgeführten Kühlwasserstrom unter einer gleichzeitigen Erstarrung aus dem Gehäuse 4 ausgetragen wird.

Das Granuliergehäuse 4 ist mit einem umlaufenden Verbindungsflansch 8 versehen, der mit einem Anschlussflansch 9 der Lochplatte 3 verbindbar ist, und zwar gemäß dem Ausführungsbeispiel über zwei Klemmbacken 10, die die beiden aneinander liegenden Flansche 8 und 9 außen umschließen. Die die Flansche 8 und 9 aufnehmende Aufnahmenut 11 der Klemmbacken 10 ist mit sich gegen den Nutgrund verjüngenden Nutflanken 12 versehen, die mit entsprechend verlaufenden Flanschflächen zusammenwirken, sodass beim Zusammenziehen der beiden Klemmbacken 10 die Flansche 8 und 9 über den gesamten Umfang gleichmäßig aneinandergedrückt und in dieser Stellung festgehalten werden.

Die Messerkopfwelle 13, die zum Ausgleich von Fluchtungsfehlern über eine Kupplung 14 mit der Abtriebswelle eines Motors verbunden ist, ist in einer Gleithülse 15 mithilfe vorgespannter Lager 16 drehbar aber axial unverschiebbar gelagert und kann daher mithilfe der Gleithülse 15 axial an die Lochplatte 3 angestellt werden. Zu diesem Zweck ist die Gleithülse 15 in einer durch das Granuliergehäuse 4 gebildeten, vorzugsweise zylinderförmigen Verschiebeführung 17 axial verschiebbar gelagert und an einen Stelltrieb 18 angeschlossen, der an einem mit der Gleithülse 15 verbundenen Mitnehmerarm 19 angreift. Der Stelltrieb 18 ist im Ausführungsbeispiel als Spindeltrieb 20 ausgebildet, was jedoch nicht zwingend ist.

Um zwischen den Messern 21 des Messerkopfs 5 und der dem Granuliergehäuse 4 zugewandten Planfläche 22 der Lochplatte 3 einen Spalt freizulassen, der einen metallischen Abrieb zwischen der Lochplatte 3 und den Messern 21 ausschließt und trotzdem gute Schnittbedingungen sicherstellt, muss der Spalt zwischen den Messern 21 und der Lochplatte 3 so klein wie möglich ausfallen, was nur dann konstruktiv sichergestellt werden kann, wenn die Drehachse der Messerkopfwelle 13 senkrecht zur Planfläche 22 der Lochplatte 3 steht. Diese Konstruktionsvorgabe wird dadurch erreicht, dass das Granuliergehäuse 4 gegenüber der Lochplatte 3 selbst über deren Anschlussflansch 9 und nicht gegenüber dem Granulierkopf 1 ausgerichtet wird, der gegenüber der Lochplatte 3 thermisch getrennt ist. Diese Ausrichtung des Granuliergehäuses 4 gegenüber der Lochplatte 3 hat eine entsprechende Ausrichtung der Verschiebeführung 17 für die Gleithülse 15 zur Folge, weil die Verschiebeführung 17 Teil des Granuliergehäuses 4 ist. Durch diese Maßnahmen gelingt es, zwischen der Planfläche 22 der Lochplatte 3 und den Messern 21 des Messerkopfs 5 einen über die Umlaufbahn der Messer 21 konstanten Spalt in der Größenordnung von 0,01 bis 0,02 mm sicherzustellen.

Zur Entlastung des Granuliergehäuses 4 kann das Granuliergehäuse 4 an einem Traggestell 23 mit Bewegungsspiel lastabtragend abgestützt werden, beispielsweise über eine vorgespannte Feder 24. Durch eine solche Abstützung des Granuliergehäuses 4 eines üblicherweise durch einen Schlitten gebildeten Traggestells 23 kann das Granuliergehäuse 4 in der an den Granulierkopf 1 angeschlossenen Arbeitsstellung weitgehend von Gewichtsmomenten freigehalten werden, sodass das Granuliergehäuse 4 leichter ausgebildet werden kann, ohne eine sich nachteilig auf die Ausrichtung der Messerkopfwelle 13 auswirkende Verformung befürchten zu müssen.

## Patentansprüche

1. Vorrichtung zum Unterwassergranulieren von Kunststoff mit einem Granulierkopf (1), mit einem an den Granulierkopf (1) anschließbaren Granuliergehäuse (4), das einen mit einer Lochplatte (3) des Granulierkopfs (1) zusammenwirkenden Messerkopf (5) aufnimmt, dessen Messerkopfwelle (13) in einer Gleithülse (15) drehbar, aber axial unverschiebbar gelagert ist, und mit einer gehäusefesten, axialen Verschiebeführung (17) für die mittels eines Stelltriebs (18) verlagerbare Gleithülse (15), **dadurch gekennzeichnet, dass** das Granuliergehäuse (4) an einem Anschlussflansch (9) der gegenüber dem Granulierkopf (1) wärmegedämmt angeordneten Lochplatte (3) befestigbar ist und die Verschiebeführung (17) für die Gleithülse (15) bildet.

2. Vorrichtung nach Anspruch 1, **dadurch gekennzeichnet, dass** das Granuliergehäuse (4) einen an den Anschlussflansch (9) der Lochplatte (3) anschließbaren Verbindungsflansch (8) bildet und dass der Anschlussflansch (9) und der Verbindungsflansch (8) miteinander durch die beiden Flansche (8, 9) außen umgreifende Klemmbacken (10) verbindbar sind.

3. Vorrichtung nach Anspruch 1 oder 2, **dadurch gekennzeichnet, dass** das Granuliergehäuse (4) an einem Traggestell (23) mit Bewegungsspiel lastabtragend abgestützt ist.

## Claims

1. Device for underwater pelletizing of plastic with a pelletizing head (1), with a pelletizing housing (4) which can be connected to the pelletizing head (1) and accommodates a cutter head (5) which interacts with a die plate (3) of the pelletizing head (1) and whose cutter head shaft (13) is mounted in a sliding sleeve (15) so as to be rotatable but axially non-displaceable, and with an axial displacement guide (17), fixed to the housing, for the sliding sleeve (15), which sliding sleeve (15) can be displaced by means of an adjusting drive (18), **characterized in that** the pelletizing housing (4) can be fastened to a mounting flange (9) of the die plate (3) arranged in a thermally insulated manner with respect to the pelletizing head (1) and forms the displacement guide (17) for the sliding sleeve (15).

2. Device according to claim 1, **characterized in that** the pelletizing housing (4) forms a connecting flange (8) which can be connected to the mounting flange (9) of the die plate (3), and **in that** the mounting flange (9) and the connecting flange (8) can be connected to one another by clamping jaws (10) which engage around the outside of the two flanges (8, 9).

3. Device according to claim 1 or 2, **characterized in that** the pelletizing housing (4) is supported with movement clearance in a load-bearing manner on a support frame (23).

## Revendications

1. Dispositif pour la granulation sous l'eau de matière plastique, comprenant une tête de granulation (1), un boîtier de granulation (4) qui peut être connecté à la tête de granulation (1), dans lequel ledit boîtier reçoit une tête de fraisage (5) qui interagit avec une plaque perforée (3) de la tête de granulation (1), dans lequel l'arbre de tête de fraisage (13) est logé de façon rotative mais axialement non déplaçable à l'intérieur d'un manchon de glissement (15), et comprenant un guide de déplacement axial (17) solidaire du boîtier pour le manchon de glissement (15) qui peut être déplacé au moyen d'un entraînement de réglage (18), **caractérisé en ce que** le boîtier de granulation (4) peut être fixé à une bride de raccordement (9) de la plaque perforée (3) qui est disposée de façon isolée thermiquement par rapport à la tête de granulation (1) et qui forme le guide de déplacement (17) pour le manchon de glissement (15).

2. Dispositif selon la revendication 1, **caractérisé en ce que** le boîtier de granulation (4) forme une bride de liaison (8) qui peut être raccordée à la bride de raccordement (9) de la plaque perforée (3), et **en ce que** la bride de raccordement (9) et la bride de liaison (8) peuvent être reliées entre elles par l'intermédiaire de mâchoires de serrage (10) qui entourent extérieurement les deux brides (8, 9).

3. Dispositif selon la revendication 1 ou 2, **caractérisé en ce que** le boîtier de granulation (4) est supporté par un cadre de support (23) en laissant un jeu de déplacement afin de supporter la charge.
